# FASCICULE DE BREVET EUROPEEN

(11) **EP 4 585 521 B1**
(45) Date de publication et mention de la délivrance du brevet: **28.10.2026**
(21) Numéro de dépôt: 25150756.2
(22) Date de dépôt: 08.01.2025
(51) Int. Cl.: B64F 5/10, B64D 29/02

(54) **PROCÉDÉ DE MONTAGE D'UNE MOTORISATION D'UN AÉRONEF INCORPORANT UNE ÉTAPE DE COMPRESSION LONGITUDINALE D'UN JOINT, OUTILLAGE PERMETTANT DE METTRE EN OEUVRE LEDIT PROCÉDÉ**
VERFAHREN ZUR MONTAGE EINES MOTORISIERUNGSMOTORS EINES LUFTFAHRZEUGS, DAS EINEN LÄNGSKOMPRESSIONSSCHRITT EINER DICHTUNG UMFASST, UND WERKZEUG ZUR DURCHFÜHRUNG DES VERFAHRENS
METHOD FOR MOUNTING AN ENGINE OF AN AIRCRAFT INCLUDING A STEP OF LONGITUDINAL COMPRESSION OF A SEAL, TOOL FOR IMPLEMENTING SAID METHOD

(30) Priorité: 09.01.2024 FR 2400189
(43) Date de publication de la demande: 16.07.2025
(73) Titulaire: Airbus (S.A.S.), 31700 Blagnac (FR)
(72) Inventeur: ZELUS, Lucas, 31700 Blagnac (FR)
(74) Mandataire: Airbus-OPS SAS

(56) Documents cités:
- EP-A1- 2 150 462
- EP-A1- 2 848 536
- EP-A1- 3 572 330
- EP-A1- 3 757 012
- FR-A1- 3 061 480
- FR-A1- 3 098 499
- FR-A1- 3 098 793
- FR-A1- 3 098 794
- US-A1- 2009 212 155
- US-A1- 2017 057 652
- US-B2- 7 770 840
- US-B2- 8 042 342
- US-B2- 9 573 694

## Description

La présente demande se rapporte à un procédé de montage d'une motorisation d'un aéronef incorporant une étape de compression longitudinale d'un joint ainsi qu'à un outillage de compression d'un joint permettant de mettre en œuvre ledit procédé.

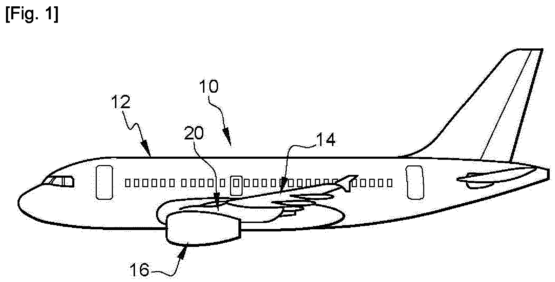

Comme illustré sur la figure 1, un aéronef 10 comprend un fuselage 12, des ailes 14 positionnées de part et d'autre du fuselage 12 ainsi que des ensembles de propulsion 16 positionnés sous les ailes 14 et reliés à ces dernières.

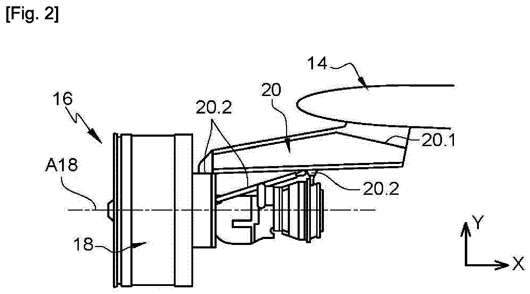

Selon un mode de réalisation visible sur la figure 2, chaque ensemble de propulsion 16 comprend une motorisation 18, un mât 20, au moins une attache voilure 20.1 reliant le mât 20 à une des ailes 14, au moins une attache moteur 20.2 reliant la motorisation 18 et le mât 20 ainsi qu'une nacelle (non représentée) qui enveloppe la motorisation 18.

Pour la suite de la description, une direction longitudinale X est parallèle à l'axe de rotation A18 de la motorisation 18 et sensiblement horizontale lorsque l'aéronef 10 est au sol. Une direction transversale Y est perpendiculaire à la direction longitudinale X et horizontale. Une direction verticale Z est une direction perpendiculaire à la direction longitudinale X et verticale. Un plan transversal est un plan perpendiculaire à la direction longitudinale X. Les notions avant/arrière font référence au sens d'écoulement de l'air dans la motorisation 18 en vol, qui s'écoule de l'avant vers l'arrière.

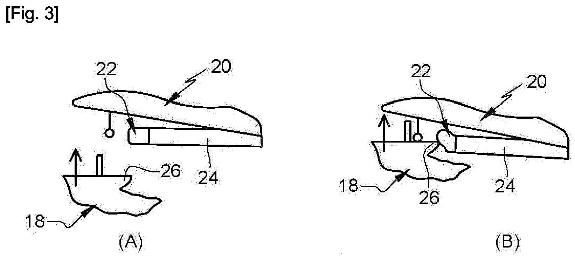

Comme illustré sur la figure 3, l'ensemble de propulsion 16 comprend un joint transversal 22 solidaire du mât 20 et positionné dans un plan transversal.

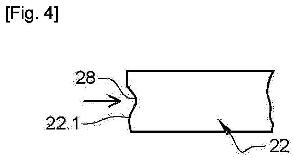

Comme illustré sur la figure 4, ce joint transversal 22 présente deux faces d'extrémité 22.1 configurées pour coopérer avec d'autres joints (non représentés).

En fonctionnement, le joint transversal 22 est conçu pour être comprimé selon la direction longitudinale X entre une première partie 24 solidaire du mât 20 et une deuxième partie 26 solidaire de la motorisation 18.

Selon un procédé de montage visible sur la figure 3, la motorisation 18 positionnée au sol est déplacée selon la direction verticale, comme illustré sur la partie (A) de la figure 3, puis fixée au mât 20. Lors de cette mise en place, la deuxième partie 26 solidaire de la motorisation 18 interfère avec le joint transversal 22 et le déforme vers le haut, comme illustré sur la partie (B) de la figure 3.

Ce procédé de montage n'est pas optimal car le joint transversal 22 n'est pas réellement comprimé selon la direction longitudinale X entre la première partie 24 solidaire du mât 20 et la deuxième partie 26 solidaire de la motorisation 18. Par ailleurs, la déformation du joint transversal 22 produite lors de ce montage conduit à la formation d'un creux 28 au niveau des faces d'extrémité 22.1, comme illustré sur la figure 4, qui ne permet pas d'obtenir une étanchéité optimale avec les autres joints plaqués contre les faces d'extrémité 22.1 du joint transversal 22.

Le document FR3098794 décrit un ensemble propulseur d'aéronef comprenant un mât comportant une structure primaire, une pièce intermédiaire en forme de cuvette positionnée par emboîtement au niveau d'une ouverture frontale de la structure primaire du mât, ainsi qu'une attache moteur avant, des première et deuxième bielles reliant le mât avec le moteur. Dans le document EP3757012, il est décrit un ensemble propulseur d'aéronef comprenant une attache moteur reliant une structure primaire d'un mât à un moteur, ladite attache moteur composé d'une première et d'une deuxième attaches moteur. Cet ensemble propulseur d'aéronef améliore la reprise des efforts et l'intégration des équipements.

Le document FR3098793 concerne un ensemble propulseur d'aéronef comprenant une attache moteur avant pour lier une structure primaire au carter de soufflante du moteur. Cette attache comprend une platine, des bielles transversales, avec des axes de pivotement longitudinaux, et des bielles longitudinales, avec des axes de pivotement transversaux, connectent la platine au carter de soufflante. Au moins une liaison de chaque type intègre une rotule. Cet ensemble propulseur d'aéronef améliore la reprise des efforts.

D'autres documents décrivent différents ensembles propulseur, tels que les documents US2017/057652, EP2150462, FR3061480, US9573694, EP2848536, US7770840, US2009/212155, US8042342, EP3572330 et FR3098499.

La présente invention vise à remédier à tout ou partie des inconvénients de l'art antérieur.

A cet effet, l'invention a pour objet un procédé de montage d'une motorisation d'un ensemble de propulsion d'un aéronef, ledit ensemble de propulsion comprenant un mât, au moins une attache moteur reliant la motorisation et le mât ainsi qu'au moins un joint transversal comprimé selon une direction longitudinale en fonctionnement entre une première partie solidaire de la motorisation et une deuxième partie solidaire du mât, ledit procédé comprenant une étape de déplacement de la motorisation d'une position initiale vers une position finale puis une étape de fixation de la motorisation en la reliant au mât grâce à l'attache moteur.

Selon l'invention, le procédé de montage comprend une étape de compression du joint transversal selon la direction longitudinale avant que la motorisation ne soit en position finale puis une étape de relâchement du joint transversal après l'étape de déplacement lorsque la motorisation est dans la position finale.

Dans la mesure où le joint transversal est comprimé, il n'interfère pas avec la motorisation lors de son positionnement dans la position finale. Par conséquent, après le montage de la motorisation, le joint transversal est correctement comprimé entre la motorisation et le mât et n'est pas déformé vers le haut par la motorisation. Ainsi, chaque face d'extrémité du joint transversal est sensiblement plane ou légèrement bombée, ce qui permet d'assurer une étanchéité optimale avec les autres joints plaqués contre les faces d'extrémité.

Selon une autre caractéristique, l'étape de relâchement est réalisée après l'étape de fixation. Selon une autre caractéristique, le procédé comprend une étape de positionnement d'une plaque contre le joint transversal pour le comprimer lors de l'étape de compression puis une étape de retrait de la plaque après l'étape de relâchement du joint transversal.

L'invention a également pour objet un outillage de compression d'un joint transversal permettant de mettre en œuvre un procédé de montage selon l'une des caractéristiques précédentes. Selon l'invention, l'outillage de compression comprend des premier et deuxième supports d'arrimage configurés pour être fixés sur un mât d'aéronef, au moins une plaque configurée pour être plaquée contre le joint transversal, une première liaison reliant la plaque et le premier support d'arrimage ainsi qu'une deuxième liaison reliant la plaque et le deuxième support d'arrimage, au moins une liaison parmi les première et deuxième liaisons comprenant un mécanisme de tension configuré pour tirer sur la plaque afin de comprimer le joint transversal.

Selon une autre caractéristique, chacune des première et deuxième liaisons comprend un mécanisme de tension.

Selon une autre caractéristique, la première liaison comprend un premier mécanisme de tension solidaire du premier support d'arrimage ainsi qu'une première sangle reliant une première extrémité de la plaque et le premier mécanisme de tension. En complément, la deuxième liaison comprend un deuxième mécanisme de tension solidaire du deuxième support d'arrimage ainsi qu'une deuxième sangle reliant une deuxième extrémité de la plaque et le deuxième mécanisme de tension.

Selon une autre caractéristique, chaque sangle forme une boucle. En complément, pour chaque sangle, la plaque comprend au moins une lumière permettant à la sangle de la traverser, chaque mécanisme de tension comprenant deux ailes qui forment une chape, une goupille fixe reliant les deux ailes ainsi qu'une goupille amovible reliant les deux ailes, les goupilles fixes et amovibles étant positionnées à l'intérieur de la boucle formée par la sangle. Selon une autre caractéristique, chaque mécanisme de tension comprend un support coulissant relié au premier ou deuxième support d'arrimage par une liaison glissière, qui permet au support coulissant de se translater par rapport au premier ou deuxième support d'arrimage selon une direction de traction entre une première position dans laquelle le support coulissant tire sur la plaque en direction du premier ou deuxième support d'arrimage et une deuxième position dans laquelle le support coulissant permet à la plaque de s'écarter du premier ou deuxième support d'arrimage, ainsi qu'une genouillère, qui relie le support coulissant et le premier ou deuxième support d'arrimage, configurée pour occuper un état déverrouillé dans lequel la genouillère permet au support coulissant de se translater de la première position vers la deuxième position et un état verrouillé dans lequel la genouillère maintient le support coulissant dans la première position.

Selon une autre caractéristique, chaque genouillère comprend une commande, pour contrôler son état, comportant une tige qui présente une première extrémité reliée à la genouillère ainsi qu'une deuxième extrémité libre.

Selon une autre caractéristique, la tige est télescopique.

Selon une autre caractéristique, la plaque comprend au moins un raidisseur pour la rigidifier. Selon une autre caractéristique, la plaque comprend au moins une poignée.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue latérale d'un ensemble de propulsion sans nacelle,
- La figure 3 est une représentation schématique d'une partie d'un ensemble de propulsion comportant un joint transversal, à différentes étapes d'un procédé de montage de la motorisation, illustrant un mode de réalisation de l'art antérieur,
- La figure 4 est une vue de face d'une extrémité du joint transversal visible sur la figure 3 à l'issue du procédé de montage de la motorisation,
- La figure 5 est une représentation schématique d'une partie d'un ensemble de propulsion comportant un joint transversal, à différentes étapes d'un procédé d'assemblage de la motorisation, illustrant un mode de réalisation de l'invention,
- La figure 6 est une vue de face d'une extrémité du joint transversal visible sur la figure 5 à l'issue du procédé de montage de la motorisation,
- La figure 7 est une vue en perspective d'un mât d'aéronef équipé d'un outillage de compression d'un joint transversal illustrant un mode de réalisation de l'invention,
- La figure 8 est une vue de dessous d'une partie du mât visible sur la figure 7 équipé d'un outillage de compression illustrant un mode de réalisation de l'invention,

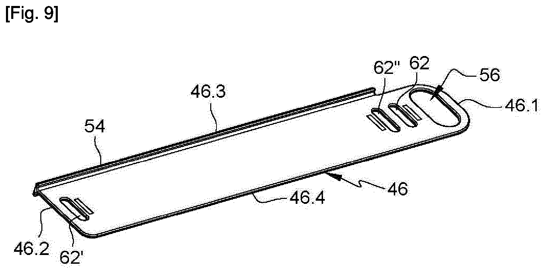

- La figure 9 est une vue en perspective d'une bande de compression illustrant un mode de réalisation de l'invention,

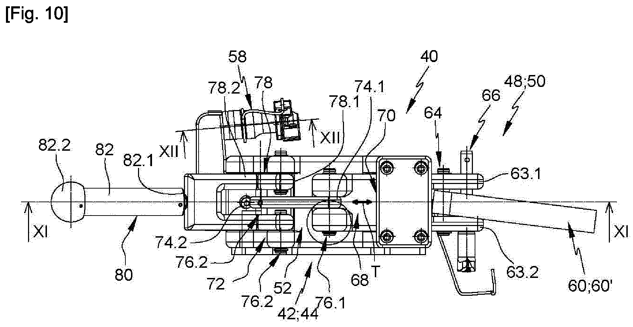

- La figure 10 est une vue latérale d'un outillage de compression illustrant un mode de réalisation de l'invention,

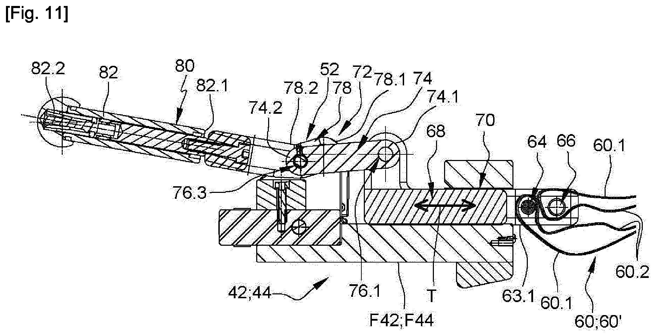

- La figure 11 est une coupe selon la ligne XI-XI de la figure 10 de l'outillage de compression,

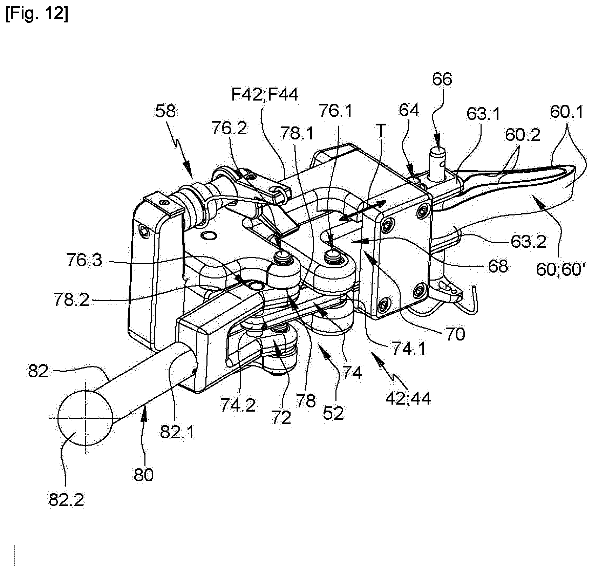

- La figure 12 est une vue en perspective d'une partie d'un outillage de compression illustrant un mode de réalisation de l'invention.

Selon un mode de réalisation, un aéronef comprend au moins un ensemble de propulsion positionné sous une aile de l'aéronef et relié à cette dernière.

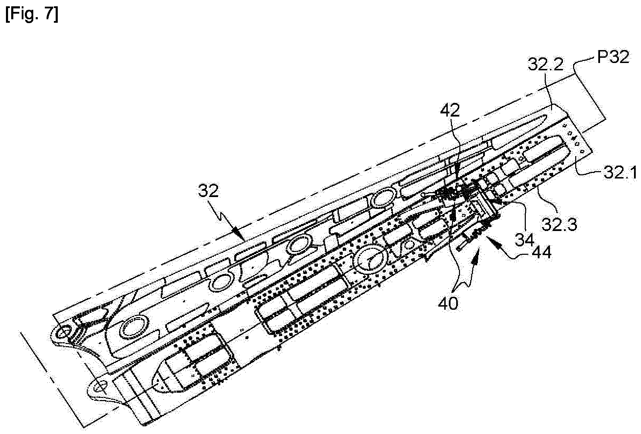

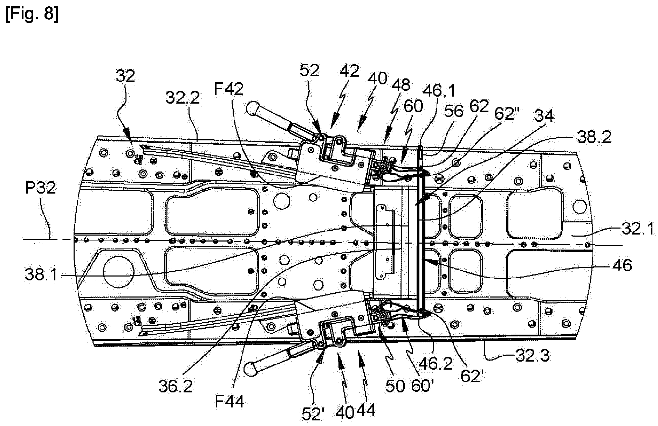

Chaque ensemble de propulsion comprend une motorisation 30, un mât 32, au moins une attache voilure reliant le mât 32 à une des ailes de l'aéronef, au moins une attache moteur reliant la motorisation 30 et le mât 32 ainsi qu'une nacelle (non représentée) qui enveloppe la motorisation 30. Selon un mode de réalisation visible sur les figures 7 et 8, le mât 32 présente un plan médian vertical P32, une face inférieure 32.1 ainsi que des première et deuxième faces latérales 32.2, 32.3 positionnées de part et d'autre du plan médian vertical P32.

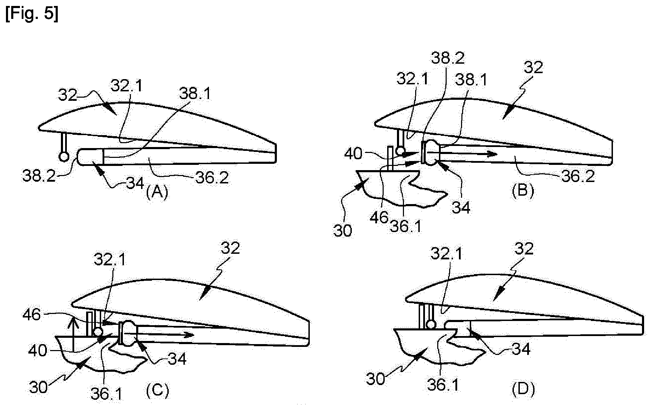

Comme illustré sur la figure 5, l'ensemble de propulsion comprend au moins un joint transversal 34 intercalé entre une première partie 36.1 solidaire de la motorisation 30 et une deuxième partie 36.2 solidaire du mât 32, les première et deuxième parties 36.1, 36.2 ainsi que le joint transversal 34 étant décalés les uns par rapport aux autres selon la direction longitudinale X, la première partie 36.1 étant décalée vers l'avant par rapport au joint transversal 34, la deuxième partie 36.2 étant décalée vers l'arrière par rapport au joint transversal 34. Le joint transversal 34 est relié à la deuxième partie 36.2 solidaire du mât 32 et comprimé entre les première et deuxième parties 36.1, 36.2 en fonctionnement.

Le joint transversal 34 est positionné dans un plan transversal et présente un rayon de courbure centré sur l'axe de rotation de la motorisation 30.

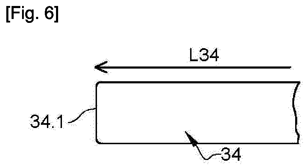

Comme illustré sur la figure 6, le joint transversal 34 est un élément longiligne, sensiblement cylindrique, et présente au moins une face d'extrémité 34.1 configurée pour coopérer avec un autre joint (non représenté). Selon une configuration, le joint transversal 34 s'étend entre deux faces d'extrémité 34.1 positionnées de part et d'autre du plan médian vertical P32 du mât 32 et situées entre les première et deuxième faces latérales 32.2, 32.3 du mât 32. Lorsque le joint transversal 34 n'est pas comprimé, les deux faces d'extrémité 34.1 sont sensiblement planes. Le joint transversal 34 présente une longueur L34 correspondant à la dimension mesurée entre les deux faces d'extrémité 34.1.

Selon un mode de réalisation, le joint transversal 34 présente une première face latérale 38.1 fixée à la deuxième partie 36.2 solidaire du mât 32 ainsi qu'une deuxième face latérale 38.2 configurée pour être plaquée contre la première partie 36.1 solidaire de la motorisation 30. Selon un agencement, la première face latérale 38.1 est sensiblement plane, positionnée approximativement dans un plan transversal et reliée à la deuxième partie 36.2 solidaire du mât 32 par au moins une liaison.

Après son montage, la motorisation 30 occupe une position finale dans laquelle ladite motorisation 30 est reliée au mât 32 et comprime le joint transversal 34. Préalablement au montage de la motorisation 30, cette dernière est positionnée au niveau du sol, sous le mât 32 qui est déjà relié à l'aile de l'aéronef. La motorisation 30 occupe une position initiale sensiblement à l'aplomb de la position finale.

Un procédé de montage de la motorisation 30 comprend une étape de déplacement de la motorisation 30 de la position initiale jusqu'à la position finale puis une étape de fixation de la motorisation 30 en la reliant au mât 32.

Selon une particularité de l'invention, le procédé de montage comprend une étape de compression selon la direction longitudinale X du joint transversal 34 avant que la motorisation 30 ne soit en position finale puis une étape de relâchement du joint transversal 34 après l'étape de déplacement lorsque la motorisation 30 est dans la position finale. L'étape de relâchement est réalisée après l'étape de fixation.

Selon ce mode de réalisation, dans la mesure où le joint transversal 34 est comprimé, il n'interfère pas avec la motorisation 30 lors de son positionnement dans la position finale et par conséquent n'est pas déformé vers le haut par la motorisation 30. Après le montage de la motorisation 30, le joint transversal 34 est correctement comprimé entre les première et deuxième parties 36.1, 36.2 solidaires respectivement de la motorisation 30 et du mât 32. Chaque face d'extrémité 34.1 du joint transversal 34 est sensiblement plane ou légèrement bombée, ce qui permet d'assurer une étanchéité optimale avec les autres joints plaqués contre les faces d'extrémité 34.1.

Un outillage de compression 40 monté sur le mât 32 est utilisé pour comprimer le joint transversal 34. Cet outillage comprend des premier et deuxième supports d'arrimage 42, 44 configurés pour être fixés sur le mât 32, au moins une plaque 46, configurée pour être plaquée contre le joint transversal 34, qui s'étend entre des première et deuxième extrémités 46.1, 46.2, une première liaison 48 reliant la première extrémité 46.1 de la plaque 46 et le premier support d'arrimage 42 et une deuxième liaison 50 reliant la deuxième extrémité 46.2 de la plaque 46 et le deuxième support d'arrimage 44, au moins une liaison parmi les première et deuxième liaisons 48, 50 comprenant un mécanisme de tension 52 configuré pour tirer sur la plaque 46 afin de comprimer le joint transversal 34. La plaque 46 présente une longueur supérieure à celle du joint transversal 34 de manière à être en appui sur toute la longueur du joint transversal 34.

Selon une configuration, chacune des première et deuxième liaisons 48, 50 comprend un mécanisme de tension 52, les mécanismes de tension des première et deuxième liaisons 48, 50 étant positionnés de part et d'autre du plan médian vertical P32 du mât 32. Cette configuration permet d'obtenir une meilleure répartition des efforts de compression sur toute la longueur du joint transversal 34.

Selon un mode de réalisation, la plaque 46 est métallique. A titre d'exemple, cette plaque 46 est en acier. Bien entendu, l'invention n'est pas limitée à cette matière.

Selon une configuration, la plaque 46 comprend un revêtement de protection, comme une peinture par exemple, pour limiter les risques d'endommagement du joint transversal 34.

Selon un agencement, la plaque 46 comprend au moins un raidisseur 54 pour la rigidifier afin qu'elle conserve une forme sensiblement plane malgré des efforts de traction à chacune de ses extrémités.

Selon un mode de réalisation, la plaque 46 est sensiblement rectangulaire et présente deux grands côtés 46.3, 46.4 reliant ses première et deuxième extrémités 46.1, 46.2. Dans ce cas, la plaque 46 comprend au moins raidisseur 54 qui s'étend selon au moins un des deux grands côtés 46.3, 46.4.

Selon un mode de réalisation, la plaque 46 comprend au moins une poignée 56 positionnée au niveau d'au moins une des première et deuxième extrémités 46.1, 46.2. Selon un agencement, la poignée 56 est un trou oblong traversant la plaque 46, positionné au niveau de la première extrémité 46.1. Cette poignée 56 permet de tirer sur la plaque 46, après le montage de la motorisation 30, pour la retirer lorsqu'elle est coincée entre le joint transversal 34 et la première partie 36.1 solidaire de la motorisation 30.

Selon un premier mode de réalisation, chaque support d'arrimage 42, 44 comprend une face de contact F42, F44 configurée pour être plaquée contre une zone plane de la première ou deuxième face latérale 32.2, 32.3 du mât 32. Chaque support d'arrimage 42, 44 est fixé à un point d'ancrage du mât 32 grâce à au moins un système de fixation 58, ledit point d'ancrage étant utilisé ultérieurement pour fixer au moins un élément de l'ensemble de propulsion sur le mât 32. Le système de fixation 58 permet une immobilisation du support d'arrimage 42, 44 par rapport au mât 32 ainsi qu'un montage et un démontage rapides et aisés dudit support d'arrimage 42, 44 sur le mât 32.

Selon un premier mode de réalisation visible sur la figure 8, la première liaison 48 comprend un premier mécanisme de tension 52 solidaire du premier support d'arrimage 42 ainsi qu'une première sangle 60 reliant la première extrémité 46.1 de la plaque 46 et le premier mécanisme de tension 52. En complément, la deuxième liaison 50 comprend un deuxième mécanisme de tension 52' solidaire du deuxième support d'arrimage 44 ainsi qu'une deuxième sangle 60' reliant la deuxième extrémité 46.2 de la plaque 46 et le deuxième mécanisme de tension 52'. Selon un autre mode de réalisation non représenté, la première liaison 48 comprend une première sangle reliant la première extrémité 46.1 de la plaque 46 et le premier support d'arrimage 42. En complément, la deuxième liaison 50 comprend un mécanisme de tension 52' solidaire du deuxième support d'arrimage 44 ainsi qu'une deuxième sangle reliant la deuxième extrémité 46.2 de la plaque 46 et le mécanisme de tension 52'.

Chaque sangle 60, 60' est une bande de matière, notamment tissée. Selon une configuration, chaque sangle 60, 60' forme une boucle présentant deux brins 60.1, 60.2 accolés l'un contre l'autre lorsque la sangle 60, 60' est tendue.

Pour chaque sangle 60,60', la plaque 46 comprend au moins une lumière 62, 62' permettant à la sangle de la traverser. Selon une configuration, la plaque 46 comprend, au niveau de sa première extrémité 46.1, deux lumières 62, 62" sensiblement parallèles entre elles et perpendiculaires aux grands côtés 46.3, 46.4 de la plaque 46, la poignée 56 étant intercalée entre les lumières 62, 62" et la première extrémité 46.1. En complément, la plaque 46 comprend, au niveau de sa deuxième extrémité 46.2, une lumière 62' proche de cette deuxième extrémité 46.2.

Pour chaque sangle 60, 60', chaque mécanisme de tension 52, 52' ou chaque support d'arrimage 42, 44 comprend deux ailes 63.1, 63.2 formant une chape, une goupille fixe 64 reliant les deux ailes 63.1, 63.2 ainsi qu'une goupille amovible 66 reliant les deux ailes, les goupilles fixes et amovibles 64, 66 étant positionnées à l'intérieur de la boucle formée par la sangle 60, 60'. Ainsi, chaque sangle 60, 60 est positionnée entre les première et deuxième ailes 63.1, 63.2 de la chape et s'étend à partir de la goupille fixe 64 jusqu'à la goupille amovible 66 en passant à travers au moins une lumière 62, 62', 62" de la plaque 46. Il est possible de détacher la sangle 60, 60' en retirant la goupille amovible 66.

Selon un mode de réalisation, chaque mécanisme de tension 52, 52' comprend un support coulissant 68, auquel est reliée la première ou deuxième sangle 60, 60', relié au support d'arrimage 42, 44 par une liaison glissière 70, qui permet au support coulissant 68 de se translater par rapport au support d'arrimage 42, 44 selon une direction de traction T entre une première position dans laquelle le support coulissant 68 tire sur la plaque 46 en direction du support d'arrimage 42, 44 et une deuxième position dans laquelle le support coulissant 68 permet à la plaque 46 de s'écarter du support d'arrimage 42, 44, ainsi qu'une genouillère 72, qui relie le support coulissant 68 et le support d'arrimage 42, 44, configurée pour occuper un état déverrouillé dans lequel la genouillère 72 permet au support coulissant 68 de se translater de la première position vers la deuxième position et un état verrouillé dans lequel la genouillère 72 maintient le support coulissant 68 dans la première position.

Selon un mode de réalisation, la genouillère 72 comprend une première biellette 74 qui présente une première extrémité 74.1 reliée au support coulissant 68 par une première liaison pivotante 76.1 et une deuxième extrémité 74.2 ainsi qu'une deuxième biellette 78 qui présente une première extrémité 78.1 reliée au support d'arrimage 42, 44 par une deuxième liaison pivotante 76.2 et une deuxième extrémité 78.2 reliée à la deuxième extrémité 74.2 de la première biellette 74 par une troisième liaison pivotante 76.3, les première, deuxième et troisième liaisons pivotantes 76.1, 76.2, 76.3 comportant des axes de pivotement parallèles entre eux et perpendiculaires à la direction de traction T.

Selon un mode de réalisation, chaque genouillère 72 comprend une commande 80, pour contrôler son état, permettant de basculer la genouillère 72 de l'état verrouillé à l'état déverrouillé ou inversement. Selon une configuration, cette commande 80 comprend une tige 82 qui présente une première extrémité 82.1 reliée à la deuxième biellette 78 ainsi qu'une deuxième extrémité 82.2 libre. Selon un agencement, la tige 82 est positionnée dans le prolongement de la deuxième biellette 78. Ainsi, à l'état verrouillé, la tige 82 est sensiblement parallèle à la première ou deuxième face latérale 32.2, 32.3 du mât 32.

Bien entendu, l'invention n'est pas limitée à ce mode de réalisation pour la commande 80. Selon une configuration, la tige 82 est télescopique. Cette solution permet de rendre accessible la commande 80, et ce même en présence de capots enveloppant le mât 32.

Le principe de fonctionnement de l'outillage de compression est le suivant :
Au départ, la motorisation 30 est positionnée sensiblement à l'aplomb de sa position finale.

Le procédé de montage de la motorisation comprend une étape de positionnement de la plaque 46 conte le joint transversal 34 et une étape de compression du joint transversal 34 par la plaque 46. A cet effet, les supports d'arrimage 42, 44 sont fixés sur le mât 32. Les genouillères 72 étant à l'état déverrouillé, la plaque 46 est positionnée contre le joint transversal 34. En suivant, les genouillères 72 sont basculées à l'état verrouillé. Dès lors la plaque 46 comprime le joint transversal 34 selon la direction longitudinale X.

La motorisation 30 est alors positionnée dans la position finale et reliée au mât 32.

En suivant, le procédé de montage comprend une étape de retrait de la plaque 46. A cet effet, les genouillères 72 sont basculées à l'état déverrouillé. Dès lors, la plaque 46 n'est plus mise en tension par les genouillères 72 mais reste coincée entre les première et deuxième parties 36.1, 36.2 solidaires respectivement de la motorisation 30 et du mât 32. La plaque 46 est alors retirée en la tirant grâce à la poignée 56. En présence de capots autour du mât 32, la plaque 46 peut être retirée en la tirant vers le haut.

Cet outillage de compression 40 permet de comprimer le joint transversal 34 préalablement à la mise en place de la motorisation 30. Ainsi, ce joint transversal 34 n'est plus déformé vers le haut lors de la mise en place de la motorisation 30.

## Revendications

1. Procédé de montage d'une motorisation (30) d'un ensemble de propulsion d'un aéronef, ledit ensemble de propulsion comprenant un mât (32), au moins une attache moteur reliant la motorisation (30) et le mât (32) ainsi qu'au moins un joint transversal (34) comprimé selon une direction longitudinale (X) en fonctionnement entre une première partie (36.1) solidaire de la motorisation (30) et une deuxième partie (36.2) solidaire du mât (32), ledit procédé comprenant une étape de déplacement de la motorisation (30) d'une position initiale vers une position finale puis une étape de fixation de la motorisation (30) en la reliant au mât (32) grâce à l'attache moteur, ledit procédé comprenant une étape de compression du joint transversal (34) selon la direction longitudinale (X) avant que la motorisation (30) ne soit en position finale puis une étape de relâchement du joint transversal (34) après l'étape de déplacement lorsque la motorisation (30) est dans la position finale.

2. Procédé de montage selon la revendication précédente, **caractérisé en ce que** l'étape de relâchement est réalisée après l'étape de fixation.

3. Procédé de montage selon l'une des revendications précédentes, **caractérisé en ce que** le procédé comprend une étape de positionnement d'une plaque (46) contre le joint transversal (34) pour le comprimer lors de l'étape de compression puis une étape de retrait de la plaque (46) après l'étape de relâchement du joint transversal (34).

4. Outillage de compression d'un joint transversal (34) permettant de mettre en œuvre un procédé de montage selon l'une des revendications précédentes, **caractérisé en ce que** l'outillage de compression comprend des premier et deuxième supports d'arrimage (42, 44) configurés pour être fixés sur un mât (32) d'aéronef, au moins une plaque (46) configurée pour être plaquée contre le joint transversal (34), une première liaison (48) reliant la plaque (46) et le premier support d'arrimage (42) et une deuxième liaison (50) reliant la plaque (46) et le deuxième support d'arrimage (44), au moins une liaison parmi les première et deuxième liaisons (48, 50) comprenant un mécanisme de tension (52, 52') configuré pour tirer sur la plaque (46) afin de comprimer le joint transversal (34).

5. Outillage de compression selon la revendication précédente, **caractérisé en ce que** chacune des première et deuxième liaisons (48, 50) comprend un mécanisme de tension (52, 52').

6. Outillage de compression selon la revendication précédente, **caractérisé en ce que** la première liaison (48) comprend un premier mécanisme de tension (52) solidaire du premier support d'arrimage (42) ainsi qu'une première sangle (60) reliant une première extrémité (46.1) de la plaque (46) et le premier mécanisme de tension (52) et **en ce que** la deuxième liaison (50) comprend un deuxième mécanisme de tension (52') solidaire du deuxième support d'arrimage (44) ainsi qu'une deuxième sangle (60') reliant une deuxième extrémité (46.2) de la plaque (46) et le deuxième mécanisme de tension (52').

7. Outillage de compression selon la revendication précédente, **caractérisé en ce que** chaque sangle (60, 60') forme une boucle, **en ce que**, pour chaque sangle (60,60'), la plaque (46) comprend au moins une lumière (62, 62') permettant à la sangle (60, 60') de la traverser et **en ce que**, pour chaque sangle (60, 60'), chaque mécanisme de tension (52, 52') comprend deux ailes (63.1, 63.2) formant une chape, une goupille fixe (64) reliant les deux ailes (63.1, 63.2) ainsi qu'une goupille amovible (66) reliant les deux ailes (63.1, 63.2), les goupilles fixes et amovibles (64, 66) étant positionnées à l'intérieur de la boucle formée par la sangle (60, 60').

8. Outillage de compression selon l'une des revendications 4 à 7, **caractérisé en ce que** chaque mécanisme de tension (52, 52') comprend un support coulissant (68) relié au premier ou deuxième support d'arrimage (42, 44) par une liaison glissière (70) qui permet au support coulissant (68) de se translater par rapport au premier ou deuxième support d'arrimage (42, 44) selon une direction de traction (T) entre une première position dans laquelle le support coulissant (68) tire sur la plaque (46) en direction du premier ou deuxième support d'arrimage (42, 44) et une deuxième position dans laquelle le support coulissant (68) permet à la plaque (46) de s'écarter du premier ou deuxième support d'arrimage (42, 44), ainsi qu'une genouillère (72), qui relie le support coulissant (68) et le premier ou deuxième support d'arrimage (42, 44), configurée pour occuper un état déverrouillé dans lequel la genouillère (72) permet au support coulissant (68) de se translater de la première position vers la deuxième position et un état verrouillé dans lequel la genouillère (72) maintient le support coulissant (68) dans la première position.

9. Outillage de compression selon la revendication précédente, **caractérisé en ce que** chaque genouillère (72) comprend une commande (80), pour contrôler son état, comportant une tige (82) qui présente une première extrémité (82.1) reliée à la genouillère (72) ainsi qu'une deuxième extrémité (82.2) libre.

10. Outillage de compression selon la revendication précédente, **caractérisé en ce que** la tige (82) est télescopique.

11. Outillage de compression selon l'une des revendications 4 à 10, **caractérisé en ce que** la plaque (46) comprend au moins un raidisseur (54) pour la rigidifier.

12. Outillage de compression selon l'une des revendications 4 à 11, **caractérisé en ce que** la plaque (46) comprend au moins une poignée (56).

## Patentansprüche

1. Verfahren zur Montage einer Motorisierung (30) einer Antriebsanordnung eines Luftfahrzeugs, wobei die Antriebsanordnung einen Pylon (32), mindestens eine die Motorisierung (30) und den Pylon (32) verbindende Triebwerksaufhängung sowie mindestens ein im Betrieb entlang einer Längsrichtung (X) komprimiertes Querverbindungselement (34) zwischen einem mit der Motorisierung (30) fest verbundenen ersten Teil (36.1) und einem mit dem Pylon (32) fest verbundenen zweiten Teil (36.2) umfasst, wobei das Verfahren einen Schritt des Bewegens der Motorisierung (30) von einer Ausgangsposition in eine Endposition und dann einen Schritt des Fixierens der Motorisierung (30), indem sie dank der Triebwerksaufhängung mit dem Pylon (32) verbunden wird, umfasst, wobei das Verfahren einen Schritt des Komprimierens des Querverbindungselements (34) entlang der Längsrichtung (X), bevor die Motorisierung (30) in der Endposition ist, und dann einen Schritt des Entspannens des Querverbindungselements (34) nach dem Schritt des Bewegens, wenn die Motorisierung (30) in der Endposition ist, umfasst.

2. Verfahren zur Montage nach dem vorhergehenden Anspruch, **dadurch gekennzeichnet, dass** der Schritt des Entspannens nach dem Schritt des Fixierens ausgeführt wird.

3. Verfahren zur Montage nach einem der vorhergehenden Ansprüche, **dadurch gekennzeichnet, dass** das Verfahren einen Schritt des Positionierens einer Platte (46) gegen das Querverbindungselement (34), um es beim Schritt des Komprimierens zu komprimieren, und dann einen Schritt des Entfernens der Platte (46) nach dem Schritt des Entspannens des Querverbindungselements (34) umfasst.

4. Kompressionswerkzeug für ein Querverbindungselement (34), das es ermöglicht, ein Verfahren zur Montage nach einem der vorhergehenden Ansprüche durchzuführen, **dadurch gekennzeichnet, dass** das Kompressionswerkzeug einen ersten und einen zweiten Befestigungsträger (42, 44), die dazu ausgestaltet sind, an einem Pylon (32) eines Luftfahrzeugs befestigt zu werden, mindestens eine Platte (46), die dazu ausgestaltet ist, gegen das Querverbindungselement (34) gepresst zu werden, ein erstes Verbindungsglied (48), das die Platte (46) und den ersten Befestigungsträger (42) verbindet, und ein zweites Verbindungsglied (50), das die Platte (46) und den zweiten Befestigungsträger (44) verbindet, umfasst, wobei mindestens ein Verbindungsglied unter den ersten und zweiten Verbindungsgliedern (48, 50) einen Spannmechanismus (52, 52') umfasst, der dazu ausgestaltet ist, an der Platte (46) zu ziehen, um das Querverbindungselement (34) zu komprimieren.

5. Kompressionswerkzeug nach dem vorhergehenden Anspruch, **dadurch gekennzeichnet, dass** jedes der ersten und zweiten Verbindungsglieder (48, 50) einen Spannmechanismus (52, 52') umfasst.

6. Kompressionswerkzeug nach dem vorhergehenden Anspruch, **dadurch gekennzeichnet, dass** das erste Verbindungsglied (48) einen mit dem ersten Befestigungsträger (42) fest verbundenen ersten Spannmechanismus (52) sowie einen ein erstes Ende (46.1) der Platte (46) und den ersten Spannmechanismus (52) verbindenden ersten Gurt (60) umfasst und dass das zweite Verbindungsglied (50) einen mit dem zweiten Befestigungsträger (44) fest verbundenen zweiten Spannmechanismus (52') sowie einen ein zweites Ende (46.2) der Platte (46) und den zweiten Spannmechanismus (52') verbindenden zweiten Gurt (60') umfasst.

7. Kompressionswerkzeug nach dem vorhergehenden Anspruch, **dadurch gekennzeichnet, dass** jeder Gurt (60, 60') eine Schlaufe bildet, dass die Platte (46) für jeden Gurt (60, 60') mindestens einen Schlitz (62, 62') umfasst, der es dem Gurt (60, 60') ermöglicht, sie zu durchqueren, und dass jeder Spannmechanismus (52, 52') für jeden Gurt (60, 60') zwei einen Gabelkopf bildende Schenkel (63.1, 63.2), einen die beiden Schenkel (63.1, 63.2) verbindenden festen Stift (64) sowie einen die beiden Schenkel (63.1, 63.2) verbindenden lösbaren Stift (66) umfasst, wobei der feste und der lösbare Stift (64, 66) innerhalb der durch den Gurt (60, 60') gebildeten Schlaufe positioniert sind.

8. Kompressionswerkzeug nach einem der Ansprüche 4 bis 7, **dadurch gekennzeichnet, dass** jeder Spannmechanismus (52, 52') einen verschieblichen Träger (68) umfasst, der mit dem ersten oder zweiten Befestigungsträger (42, 44) über eine Gleitverbindung (70) verbunden ist, die es dem verschieblichen Träger (68) ermöglicht, relativ zu dem ersten oder zweiten Befestigungsträger (42, 44) entlang einer Zugrichtung (T) zu translatieren zwischen einer ersten Position, in welcher der verschiebliche Träger (68) an der Platte (46) in Richtung des ersten oder zweiten Befestigungsträgers (42, 44) zieht, und einer zweiten Position, in welcher der verschiebliche Träger (68) der Platte (46) ermöglicht, sich von dem ersten oder zweiten Befestigungsträger (42, 44) zu beabstanden, sowie ein Kniegelenk (72), das den verschieblichen Träger (68) und den ersten oder zweiten Befestigungsträger (42, 44) verbindet und dazu ausgestaltet ist, einen entriegelten Zustand, in dem das Kniegelenk (72) dem verschieblichen Träger (68) ermöglicht, von der ersten Position in die zweite Position zu translatieren, und einen verriegelten Zustand, in dem das Kniegelenk (72) den verschieblichen Träger (68) in der ersten Position hält, einzunehmen.

9. Kompressionswerkzeug nach dem vorhergehenden Anspruch, **dadurch gekennzeichnet, dass** jedes Kniegelenk (72) ein Bedienelement (80) zur Steuerung seines Zustands umfasst, das eine Stange (82), die ein mit dem Kniegelenk (72) verbundenes erstes Ende (82.1) sowie ein freies zweites Ende (82.2) aufweist, beinhaltet.

10. Kompressionswerkzeug nach dem vorhergehenden Anspruch, **dadurch gekennzeichnet, dass** die Stange (82) teleskopisch ausgebildet ist.

11. Kompressionswerkzeug nach einem der Ansprüche 4 bis 10, **dadurch gekennzeichnet, dass** die Platte (46) mindestens eine Aussteifung (54) umfasst, um sie zu versteifen.

12. Kompressionswerkzeug nach einem der Ansprüche 4 bis 11, **dadurch gekennzeichnet, dass** die Platte (46) mindestens einen Griff (56) umfasst.

## Claims

1. Method for mounting a drive system (30) of an aircraft propulsion unit, said propulsion unit comprising a pylon (32), at least one engine attachment connecting the drive system (30) and the pylon (32), and at least one transverse seal (34) that is compressed in a longitudinal direction (X) during operation between a first part (36.1) secured to the drive system (30) and a second part (36.2) secured to the pylon (32), said method comprising a step of moving the drive system (30) from an initial position to a final position, followed by a step of fastening the drive system (30) by connecting it to the pylon (32) by virtue of the engine attachment, said method comprising a step of compressing the transverse seal (34) in the longitudinal direction (X) before the drive system (30) is in the final position, followed by a step of releasing the transverse seal (34) after the moving step once the drive system (30) is in the final position.

2. Mounting method according to the preceding claim, **characterized in that** the releasing step is carried out after the fastening step.

3. Mounting method according to either of the preceding claims, **characterized in that** the method comprises a step of positioning a plate (46) against the transverse seal (34) in order to compress it during the compression step, followed by a step of removing the plate (46) after the step of releasing the transverse seal (34).

4. Tool for compressing a transverse seal (34) that makes it possible to implement a mounting method according to one of the preceding claims, **characterized in that** the compression tool comprises first and second anchoring supports (42, 44) configured to be fastened to an aircraft pylon (32), at least one plate (46) configured to be pressed against the transverse seal (34), a first connection (48) connecting the plate (46) and the first anchoring support (42), and a second connection (50) connecting the plate (46) and the second anchoring support (44), at least one connection from among the first and second connections (48, 50) comprising a tensioning mechanism (52, 52') configured to pull on the plate (46) in order to compress the transverse seal (34).

5. Compression tool according to the preceding claim, **characterized in that** each of the first and second connections (48, 50) comprises a tensioning mechanism (52, 52').

6. Compression tool according to the preceding claim, **characterized in that** the first connection (48) comprises a first tensioning mechanism (52) secured to the first anchoring support (42), and a first strap (60) connecting a first end (46.1) of the plate (46) and the first tensioning mechanism (52), and **in that** the second connection (50) comprises a second tensioning mechanism (52') secured to the second anchoring support (44), and a second strap (60') connecting a second end (46.2) of the plate (46) and the second tensioning mechanism (52').

7. Compression tool according to the preceding claim, **characterized in that** each strap (60, 60') forms a loop, **in that**, for each strap (60, 60'), the plate (46) comprises at least one slot (62, 62') allowing the strap (60, 60') to pass through it, and **in that**, for each strap (60, 60'), each tensioning mechanism (52, 52') comprises two flanges (63.1, 63.2) forming a clevis, a fixed pin (64) connecting the two flanges (63.1, 63.2), and a removable pin (66) connecting the two flanges (63.1, 63.2), the fixed and removable pins (64, 66) being positioned inside the loop formed by the strap (60, 60').

8. Compression tool according to one of Claims 4 to 7, **characterized in that** each tensioning mechanism (52, 52') comprises a sliding support (68) connected to the first or second anchoring support (42, 44) by a slide connection (70) that allows the sliding support (68) to move in translation relative to the first or second anchoring support (42, 44) in a pulling direction (T) between a first position, in which the sliding support (68) pulls on the plate (46) in the direction of the first or second anchoring support (42, 44), and a second position, in which the sliding support (68) allows the plate (46) to move away from the first or second anchoring support (42, 44), and a toggle joint (72), which connects the sliding support (68) and the first or second anchoring support (42, 44) and is configured to occupy an unlocked state, in which the toggle joint (72) allows the sliding support (68) to move in translation from the first position to the second position, and a locked state, in which the toggle joint (72) holds the sliding support (68) in the first position.

9. Compression tool according to the preceding claim, **characterized in that** each toggle joint (72) comprises a controller (80), for controlling its state, comprising a rod (82) that has a first end (82.1) connected to the toggle joint (72), and a second free end (82.2).

10. Compression tool according to the preceding claim, **characterized in that** the rod (82) is telescopic.

11. Compression tool according to one of Claims 4 to 10, **characterized in that** the plate (46) comprises at least one stiffener (54) for stiffening it.

12. Compression tool according to one of Claims 4 to 11, **characterized in that** the plate (46) comprises at least one handle (56).
